# EUROPÄISCHE PATENTSCHRIFT

(11) **EP 0 773 349 B1**
(45) Veröffentlichungstag und Bekanntmachung des Hinweises auf die Patenterteilung: **12.12.2001**
(21) Anmeldenummer: 96810694.8
(22) Anmeldetag: 14.10.1996
(51) Int. Cl.: F01K 23/10, F02C 7/18, F22B 1/18, F22B 21/26

(54) **Helix-Dampferzeuger für Kraftwerksanlagen**
Helical steam-generator for power plants
Générateur de vapeur à hélice pour centrales

(30) Priorität: 10.11.1995 DE 19541914
(43) Veröffentlichungstag der Anmeldung: 14.05.1997
(73) Patentinhaber: ASEA BROWN BOVERI AG, 5400 Baden (CH)
(72) Erfinder: Nielsen, Henrik, 5430 Wettingen (CH); Ruchti, Christoph, Dr., 8610 Uster (CH)
(74) Vertreter: Pöpper, Evamaria, Dr.

(56) Entgegenhaltungen:
- WO-A-93/13378
- DE-C- 4 333 439
- US-A- 3 212 571
- US-A- 3 398 720
- von Karman Institute for Fluid Dynamics, Lecture Series 1991-04, Industrial Heat Exchangers, May 27-31, 1991, "Classification of Heat Exchangers", R. K. Shah, Seiten 9 und 10, Fig 1.8

## Beschreibung

### Technisches Gebiet

Die Erfindung betrifft einen Helix-Dampferzeuger für Kraftwerksanlagen, welcher verdichtete oder vorverdichtete Luft aus der Verdichtereinheit zu Kühlluft für die Kühlung thermisch belasteter Aggregate der Kraftwerksanlage bereitstellt.

### Stand der Technik

Bei Gasturbinenanlagen mit einfachen Zyklus ist es bisher üblich, die vom Verdichter entnommene verdichtete oder vorverdichtete Luft mittels Wassereinspritzung oder externer Kühlung zu kühlen, bevor diese als Kühlluft dem Kühlsystem der Turbine zugeführt wird. Dabei geht diese Wärme dem Gesamtsystem weitgehend verloren.

Bei Kombianlagen wird dagegen bekanntermassen meist eine Wasserkühlung der Luft in einem Luft/Wasser-Wärmetauscher durchgeführt und die anfallende Wärme aus der Kühlluft-Kühlung in der Kraftwerksanlage wieder nutzbar gemacht. Mittels Förderpumpen wird der Druck auf der Wasserseite zur Vermeidung einer Ausdampfung über den Sattdampfdruck angehoben und das im Kühler aufgewärmte Wasser nachträglich in einem Niederdrucksystem entspannt, in welchem es ausdampfen kann. In einer abgewandelten Lösung wird der Wärmetauscher parallel zu einem Economizer eines der Gasturbogruppe nachgeschalteten Abhitzedampferzeugers betrieben. In beiden Fällen muss wegen der hohen Kühllufttemperaturen und der stark variierenden Wärmemengen mit hohen Systemdrücken gearbeitet werden. Dies hat entsprechende Verluste zur Folge. Ausserdem müssen zwecks Beherrschung von transienten Betriebsbedingungen, wie An- und Abfahren der Anlage, speziell bei Fällen, bei welchen ein Abhitzedampferzeuger zum Einsatz kommt, komplexe Regelkreise vorgesehen werden, die zu einer Verteuerung der Anlage führen und ausserdem den Wirkungsgrad der Anlage reduzieren.

Der Anmelderin ist auch eine Kraftwerksanlage bekannt, in die ein als Zwangdurchlauferhitzer ausgebildeter Kühlluftkühler integriert ist. Dadurch werden eine einfachere Regelung und ein höherer Wirkungsgrad gegenüber den oben genannten Lösungen erreicht.

Andererseits sind sogenannte Helix-Dampferzeuger bekannt (vgl. O. Profos: "Das neue Dampferzeugersystem für das französische Kernkraftwerk EL-4", Technische Rundschau Sulzer, 2, 1970, S. 69-83). Diese sind Einrohrdampferzeuger, die im wesentlichen aus einem in einem Druckbehälter angeordneten Bündel schraubenförmig gewundener und auf kompakte Weise ineinandergewickelter Glattrohre, den beiden Abschlussdeckeln und den zugehörigen Wasser- und Dampfleitungsdurchführungen bestehen. Die Heizfläche wird durch die ineinandergewickelten Schraubenrohre (Helixrohre) gebildet. Jedes Rohr wird durchgehend von unten nach oben geführt, so dass die Dampferzeugung in parallelen Einzelsträngen stattfindet. Der Wasser-Dampf-Strom fliesst von unten nach oben, während das beheizte Gas (CO₂) im Gegenstrom von oben nach unten geführt wird. Der Einsatz eines derartigen Helix-Dampferzeugers als Kühlluftkühler für eine Kraftwerksanlage, insbesondere eine Kombianlage, ist bisher nicht bekannt.

### Darstellung der Erfindung

Hier setzt die Erfindung ein. Ihr liegt die Aufgabe zugrunde, einen Kühlluftkühler für eine Kraftwerksanlage zu schaffen, der einfach und zuverlässig im Betriebsbereich zwischen 5 und 100% der Kühlleistung arbeitet und einen hohen Wirkungsgrad der Gesamtanlage garantiert. Gleichzeitig soll die Kühlleistung für die Produktion von Dampf verwendet werden.

Erfindungsgemäss wird dies dadurch erreicht, dass ein Helix-Dampferzeuger gemäss Oberbegriff des Patentanspruches 1 als Kühlluftkühler für Kombi-Kraftwerkes anlagen und Gasturbinenanlagen verwendet wird.

Der Helix-Dampferzeuger befindet sich in einem vertikal angeordneten zylindrischen Druckgefäss, seine spiralförmig gewundenen, durchgehend von unten nach oben geführten Rohre füllen einen Raum zwischen einem inneren und einem äusseren Mantelrohr aus, wobei den Rohren über eine Leitung Wasser zuführbar und über eine Leitung Dampf aus den Rohren abführbar ist, und wobei am unteren Bündelende die Rohre mit der Wasserzufuhrleitung und am oberen Bündelende die Rohre mit der Dampfabfuhrleitung verbunden sind, und eine Eintrittsleitung und eine Austrittsleitung für ein gasförmiges Medium so mit dem Druckgefäss verbunden sind, dass die Helix von oben nach unten mit dem gasförmigen Medium durchströmbar ist. Erfindungsgemäss ist das gasförmige Medium verdichtete Luft, und die Eintrittsleitung für die verdichtete Luft ist mit dem unteren Ende des inneren Mantelrohres des Druckgefässes verbunden und die Austrittsleitung für die gekühlte Luft ist stromab einer am tiefsten Punkt des Druckgefässes vorgesehenen Umlenkung der Luft angeordnet.

Die Vorteile der Erfindung bestehen unter anderem darin, dass der erfindungsgemässe Helix-Dampferzeuger ein einfaches und zuverlässiges System darstellt und zu einem hohen Wirkungsgrad der Gesamtanlage führt. Der Helix-Dampferzeuger arbeitet nach dem Prinzip des Einrohrverdampfers, welcher sich durch einen apparativ einfachen Aufbau und entsprechend zuverlässigen Betrieb auszeichnet. Das Prinzip der Aufwärtsverdampfung in stetig steigenden Rohren ermöglicht einen stabilen Betrieb des Verdampfers auch bei sehr kleinen Kühlleistungen. Durch die spiralförmig gewickelten Rohre wird eine platzsparende Ausnützung des Druckgefässes ermöglicht, welches wegen des hohen Luftdruckes eine zylindrische Form hat. Da die Rohre von der Luft quer angeströmt werden, ergibt sich ein sehr effektiver Wärmetausch.

Die Umlenkung der Luft nach Durchströmung des Bündels am tiefsten Punkt im Druckgefäss führt dazu, dass sich im Falle eines Rohrbruches austretendes Wasser aufgrund der zentrifugalen Kräfte an der tiefsten Stelle des Druckgefässes ansammelt und dort beispielsweise durch eine einfache Messung der elektrischen Leitfähigkeit festgestellt werden kann.

Es ist vorteilhaft, wenn im Helix-Dampferzeuger die Eintrittsleitung für die verdichtete Luft in den unteren Teil des inneren Mantelrohr mündet, welches seinerseits im oberen Teil in einen von einer Innenwand des Druckgefässes begrenzten Sammelraum mündet, und wenn das äussere Mantelrohr und die Aussenwand des Druckgefässes einen Ringraum begrenzen, der mit der im oberen Bereich des Kühlluftkühlers angeordneten Austrittsleitung der Kühlluft aus dem Druckgefäss in Verbindung steht. Die abgekühlte Luft strömt somit in dem ringförmigen Spalt zwischen der Druckschale und dem äusseren Mantelrohr dem Luftaustritt im oberen Bereich des Kühlers zu. Auf diese Weise ist die Umlenkung der Kühlluft besonders einfach zu bewerkstelligen und die Wandstärke der Druckschale kann auf die tiefere Lufttemperatur ausgelegt werden.

Der zentrale Vorteil der Erfindung besteht darin, die Kühlleistung für die Produktion von Dampf zu verwenden, dessen Energie durch Entspannung in der Dampfturbine optimal genutzt werden kann.

Es ist besonders zweckmässig, wenn im inneren Mantelrohr zusätzlich eine Wassereinspritzung eingebaut ist. Diese Variante ermöglicht einen optimalen Bypass-Betrieb der Kombianlage. Beim Bypass-Betrieb der Anlage werden die Abgase der Gasturbine vorbei am Abhitzekessel direkt in den Kamin geleitet, so dass kein Abnehmer für den Dampf zur Verfügung steht. Das Speisewasser kann dann wahlweise über ein Ventil in den Helix-Dampferzeuger oder über ein Ventil und die Wassereinspritzung in den Luftstrom geführt werden. Dadurch kann die Luftkühlung auf den jeweiligen Betriebszustand angepasst werden. Auch ein Mischbetrieb ist möglich.

Ferner ist es vorteilhaft, wenn zur Ermöglichung des Bypass-Betriebes in der Kühlluftleitung zwischen dem Helix-Dampferzeuger und der Gasturbine eine Vorrichtung zur Eindüsung von Dampf angeordnet ist, über die mindestens ein Teil des im Kühler produzierten Dampfes der Gasturbine zugeführt werden kann. Der erhöhte Volumenstrom führt dann zu einer leicht erhöhten Leistung derselben, so dass wenigstens ein Teil der Kühlleistung nutzbringend verwendet wird.

### Kurze Beschreibung der Zeichnung

In der Zeichnung sind Ausführungsbeispiele der Erfindung dargestellt.

Es zeigen:
- Fig. 1: eine kombinierte Gas/Dampf-Turbogruppe mit integriertem Helix-Dampferzeuger;
- Fig. 2: einen Längsschnitt des erfindungsgemässen Helix-Dampferzeugers mit oberen Luftaustritt;
- Fig. 3: einen Längsschnitt des erfindungsgemässen Helix-Dampferzeugers mit Wassereinspritzung;
- Fig. 4: einen Längsschnitt des erfindungsgemässen Helix-Dampferzeugers mit Dampfeindüsung in die Kühlluft;
- Fig. 5: einen Längsschnitt des erfindungsgemässen Helix-Dampferzeugers mit unterem Luftaustritt.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

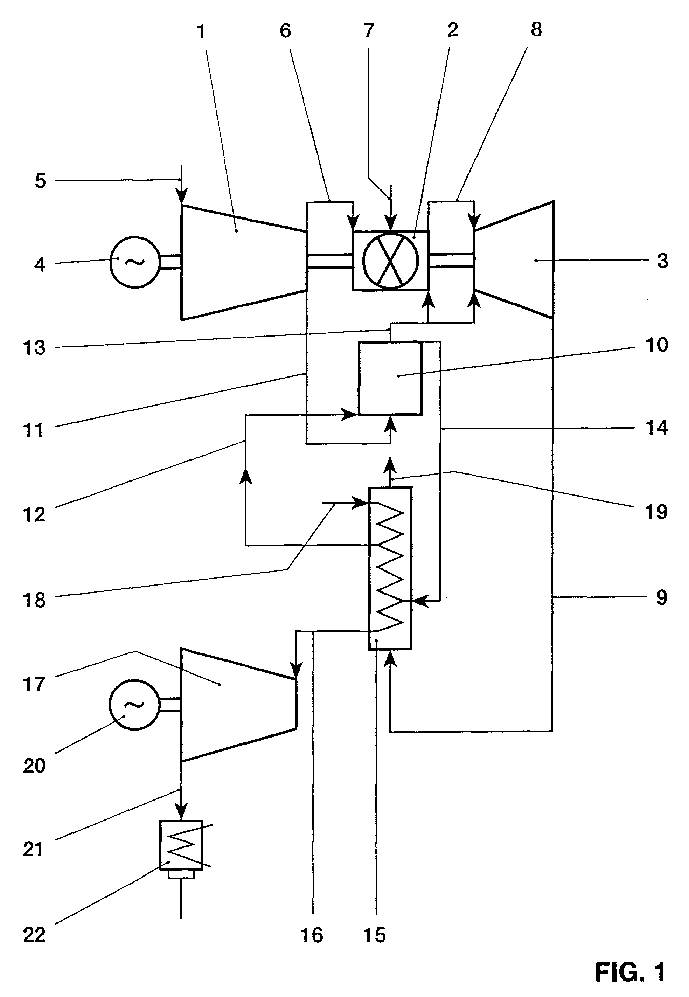

Nachfolgend wird die Erfindung anhand von Ausführungsbeispielen und der Figuren 1 bis 5 näher erläutert.

Fig. 1 zeigt eine Kombianlage mit einer Gas- und einer Dampfturbogruppe. Die Gasturbogruppe besteht aus einem Verdichter 1, einer nachgeschalteten Brennkammer 2 und einer stromab der Brennkammer 2 angeordneten Turbine 3. An die Gasturbine 3 ist ein Generator 4 angekuppelt, der für die Stromerzeugung sorgt.

Die vom Verdichter 1 angesaugte Luft 5 wird nach der Kompression als verdichtet Luft 6 in die Brennkammer 2 geleitet, dort mit eingedüstem flüssigen und/oder gasförmigen Brennstoff 7 gemischt und das Brennstoff/Luft-Gemisch verbrannt. Die von der Brennkammer 2 bereitgestellten Heissgase 8 beaufschlagen anschliessend die Gasturbine 3. Das Abgas 9 der Gasturbine 3 wird danach in einem nachgeschalteten Dampfkreislauf genutzt.

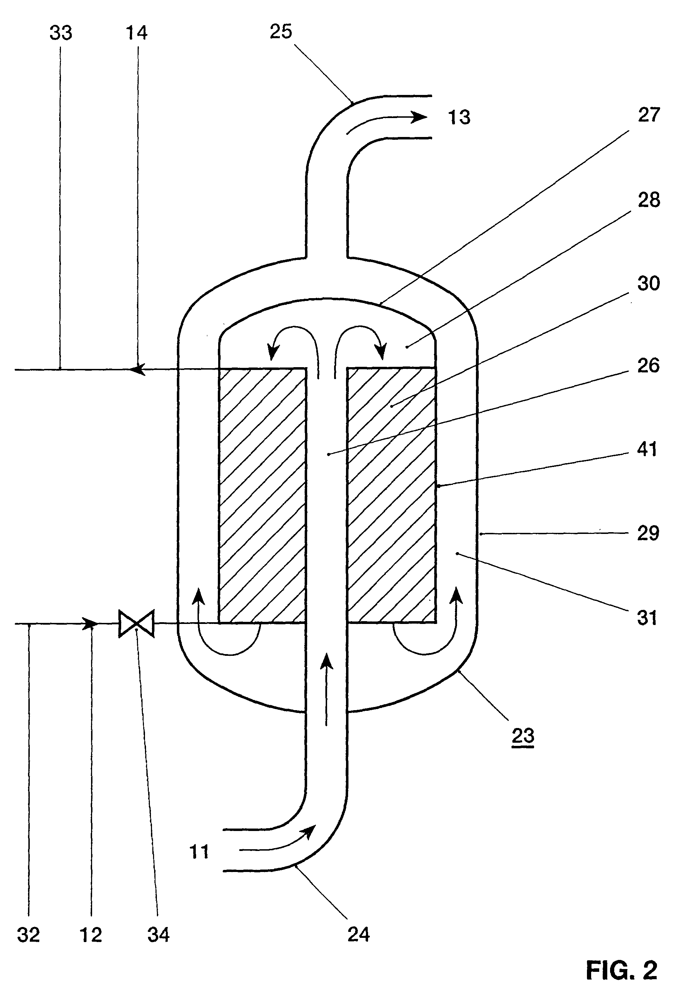

Da die Wärmebelastung der Brennkammer 2 und der Turbine 3 sehr hoch ist, muss eine möglichst effektive Kühlung der thermisch beanspruchten Aggregate erfolgen. Dies geschieht mit Hilfe des Helix-Dampferzeugers 10, welcher als Kühlluftkühler verwendet und in den nachfolgenden Figuren 2 bis 5 später näher beschrieben wird.

Der Helix-Dampferzeuger 10 wird von einer dem Verdichter 1 entnommenen Teilmenge verdichteter Luft 11, welche bereits stark aufgewärmt ist, durchströmt. Der Wärmetausch innerhalb des Helix-Dampferzeugers 10 geschieht mit dem die Rohre des Helix-Dampferzeugers durchströmenden Wasserstromes 12.

Die verdichtete Luft 11 wird daher auf der einen Seite soweit gekühlt, dass sie anschliessend als Kühlluft 13 in die zu kühlenden Aggregate geleitet wird. In Fig. 1 ist als Beispiel der Hochdruck-Kühler dargestellt. Er entnimmt vollständig verdichtete Luft 11 am Ausgang des Kompressors 1 und seine Kühlluft 13 wird zur Kühlung von Aggregaten in der Brennkammer 2 und in der höchsten Druckstufe der Gasturbine 3 eingesetzt. Als Alternative dazu kann auch Luft niedrigeren Drucks aus einer Zwischenstufe des Verdichters 1 entnommen werden, die für Kühlzwecke in der in der entsprechenden Druckstufe der Gasturbine 3 eingesetzt wird.

Auf der anderen Seite wird das Wasser 12 im Helix-Dampferzeuger 10 so stark erwärmt, dass es verdampft. Dieser Dampf 14 wird dann gemäss Fig. 1 in den Überhitzerteil des Abhitzedampferzeugers 15 geleitet, erhöht den Dampfanteil 16, mit dem die Dampfturbine 17 beaufschlagt wird und dient somit der Wirkungsgradverbesserung der gesamten Anlage. Bei diesem normalen Betrieb der Kraftwerksanlage wird der im Helix-Dampferzeuger 10 erzeugte Dampf 14 somit energietechnisch optimal genutzt. Es ist ebenso möglich, den Dampf 14 direkt dem Frischdampf 16 beizumischen oder ihn zur Brennkammer 2 bzw. zur Gasturbine 3 zu leiten.

Der Abhitzedampferzeuger 15 wird mit den noch mit einem hohem kalorischen Potential versehenen Abgasen 9 der Gasturbine 3 durchströmt. Diese wandeln mittels eines Wärmetauschverfahrens das in den Abhitzedampferzeuger 15 eintretende Speisewasser 18 in Dampf 16 um, der dann das Arbeitsmedium des übrigen Dampfkreislaufes bildet. Die kalorisch ausgenutzten Abgase strömen danach als Rauchgase 19 ins Freie. Die anfallende Energie aus der Dampfturbine 17 wird über einen angekuppeltelten Generator 20 in Strom umgewandelt. In Fig. 1 ist als Beispiel eine mehrwellige Anordnung dargestellt. Selbstverständlich können auch einwellige Anordnungen gewählt werden, bei denen die Gasturbine 3 und die Dampfturbine 17 auf einer Welle laufen und denselben Generator antreiben. Der entspannte Dampf 21 aus der Dampfturbine 17 wird in einem wasser- oder luftgekühlten Kondensator 22 kondensiert. Das Kondensat wird dann mittels einer hier nicht dargestellten Pumpe in einen stromab des Kondensators 22 angeordneten, hier nicht gezeigten Speisewasserbehälter und Entgaser gepumpt. Anschliessend wird das Wasser 18 über eine weitere Pumpe in den Abhitzedampferzeuger 15 zu einem neuen Kreislauf gepumpt bzw. wird ein Teil 12 des Wassers über ein hier nicht gezeigtes Regelventil dem Kühlluftkühler 10 zugeführt.

Die Fig. 2 bis 5 zeigen verschiedene Ausführungsvarianten des Helix-Dampferzeugers 10, der als ein -Wärmetauscher im Gegenstromprinzip aufgebaut ist.

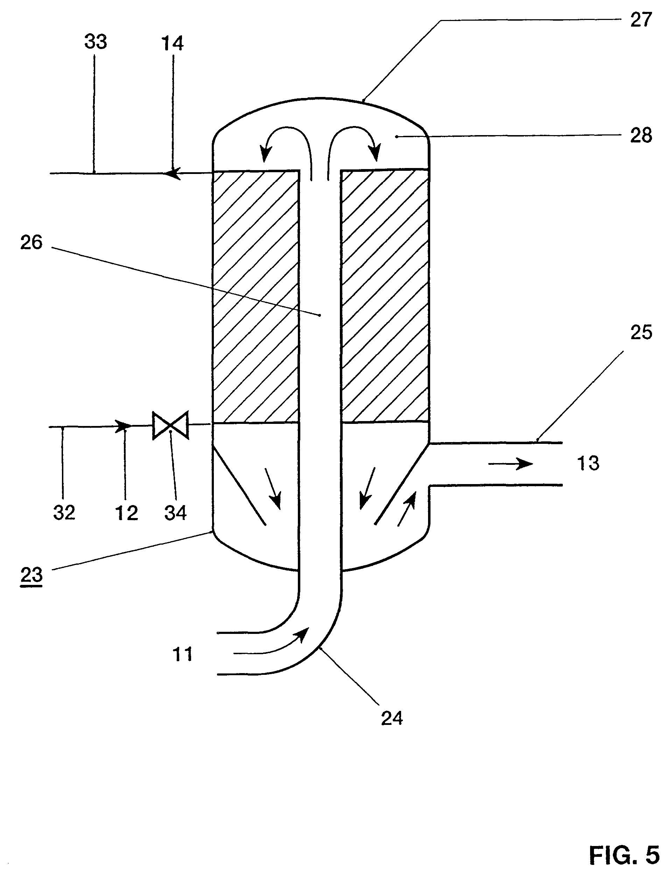

Der erfindungsgemässe Helix-Dampferzeuger 10 besteht gemäss Fig. 2 aus einem vertikal angeordneten zylinderförmigen Druckgefäss 23, in das an seinem Boden mittig eine Eintrittsleitung 24 für die vom Verdichter kommende Luft 11 mündet und von dem eine Austrittsleitung 25 für die Kühlluft 13 am oberen Ende ebenfalls mittig abzweigt. Dabei ist die Lage des Luftaustritts für die Funktionsweise ohne Bedeutung. Die Luftaustrittsleitung 25 kann auch seitwärts angeordnet, und zwar sowohl im oberen als auch im unteren Bereich des Druckgefässes 23 (vgl. Fig. 5). Die Eintrittsleitung 24 ist im Inneren des Wärmetauschers direkt mit dem zentral verlaufenden vertikalen inneren Mantelrohr 26 des Helix-Dampferzeugers verbunden. Das innere Mantelrohr 26 mündet an seinem oberen Ende in einen von einer Innenwand 27 begrenzten Sammelraum 28. Die Aussenwand 29 des Druckgefässes 23 und das durch die spiralförmig gewundenen Rohre 30 des Wärmetauschers gebildete äussere Mantelrohr 41 bilden einen Ringraum 31. In die Rohre 30 mündet unten eine Leitung 32 für die Zufuhr von Wasser 12, während oben eine Leitung 33 für die Abfuhr von Dampf 14 abzweigt.

Die Wirkungsweise des Helix-Dampferzeugers 10 ist folgende: Vom Verdichter 1 wird verdichtete Luft 11, welche bereits stark aufgewärmt ist, entnommen. Sie strömt über die Leitung 24 in das innere Mantelrohr 26 des Kühlluftkühlers ein, strömt nach oben und erfährt im Sammelraum 27 eine Umlenkung. Die Luft 11 strömt nunmehr von oben nach unten, während das über die Leitung 32 und eine nicht dargestellte Pumpe zugeführte und über ein Regelventil 34 dosierte Wasser 12 in den Rohren 30 nach oben strömt. Der dort stattfindende Wärmetausch im Gegenstromprinzip führt dazu, dass einerseits die verdichtete, heisse Luft 11 abgekühlt wird und andererseits das Wasser 12 in den Rohren 30 so erwärmt wird, dass es verdampft. Dieser Dampf 14 wird über die Leitung 33 beispielsweise in den Überhitzerteil des Abhitzedampferzeugers 15 geleitet, erhöht den Dampfanteil 16, mit dem die Dampfturbine 17 beaufschlagt wird und dient somit der Wirkungsgradverbesserung der gesamten Anlage. Die im Helix-Dampferzeuger 10 nach unten strömende abkühlende Luft erfährt am tiefsten Punkt eine Umlenkung und strömt im Ringraum 31 nach oben zum Austritt des Druckgefässes 23, von wo aus sie dann als Kühlluft 13 über die Leitung 25 zum zu kühlenden Aggregat in der Kraftwerksanlage, beispielsweise zur Gasturbine, strömt. Durch die Umlenkung der Luft 13 an der tiefsten Stelle im Druckgefäss kann sich eventuell in der Luft 13 enthaltenes Wasser am Boden des Druckgefässes 23 sammeln und dort relativ einfach messtechnisch festgestellt werden.

Die Vorteile dieser Ausführung bestehen darin, dass die Wärme zur Dampfproduktion auf einer hohen Temperatur ausgenutzt wird, die Aufwärtsverdampfung eingesetzt wird und ein Verdampfer ohne Ventile, Pumpen, Abscheider oder dergleichen eingesetzt wird. Das System ist dadurch einfach und zuverlässig und der Wirkungsgrad der Gesamtanlage ist hoch.

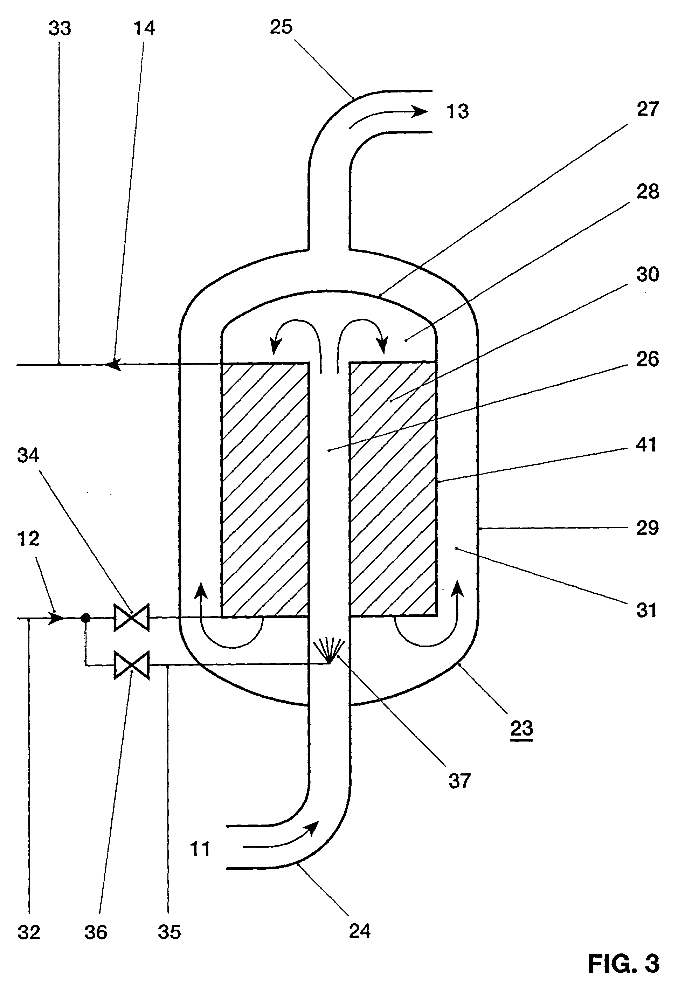

Ein weiteres Ausführungsbeispiel ist in Fig. 3 dargestellt. Dieses Ausführungsbeispiel ist besonders für den Bypass-Betrieb der Kraftwerksanlage geeignet, wenn die Kapazität des Kühlers nicht ausreicht. Es unterscheidet sich vom Ausführungsbeispiel nach Fig. 2 dadurch, dass von der Wasserleitung 32 eine Leitung 35 abzweigt, wobei die Wasserstrommenge in der Leitung 35 über ein Regelventil 36 geregelt wird. Über eine Düse 37 kann hier Wasser 12 in die heisse Luft 11 eingespritzt werden. Die Wassereinspritzung wird vor allem zur Abdeckung von selten auftretender Spitzenlast eingesetzt. Durch das Einspritzen von Wasser 12 wird der Druck erhöht und es tritt somit nur ein kleiner gasseitiger Druckabfall auf. Die Luftkühlung kann wahlweise durch die Wassereinspritzung oder durch den Helix-Wärmetauscher erfolgen bzw. ist auch ein Mischbetrieb möglich.

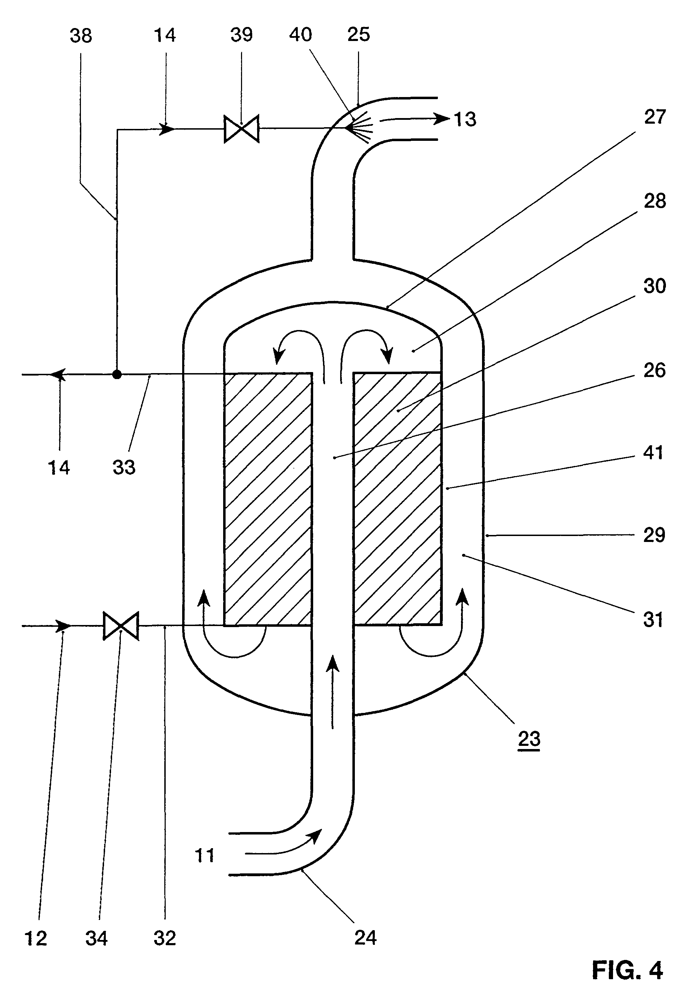

Fig. 4 zeigt eine Ausführungsvariante, bei der im Vergleich zum Ausführungsbeispiel nach Fig. 2 eine zusätzliche Dampfeinspritzung in die gekühlte Luft 13 erfolgt. Um dies zu realisieren, zweigt von der Dampfleitung 32 eine Leitung 38 ab, die mit einer Düse 40 in die Austrittsleitung 25 der Kühlluft 13 aus dem Druckgefäss 23 mündet. Die Menge des über die Leitung 38 strömenden Dampfes 14 wird über ein Regelventil 39 geregelt. Diese Variante ist besonders für die Betriebsfälle im Bypass-Betrieb der Anlage geeignet bei denen der luftseitige Druckabfall des Helix-Dampferzeugers 10 zu gross wird.

Dann kann ein Teil des im Helix-Dampferzeuger 10 produzierten Dampfes 14 über das Ventil 39 mit hoher Geschwindigkeit in die Kühlluftleitung 25 eingedüst werden. Der Impulsübertrag führt zu einer Erhöhung des Luftdruckes, was den Druckabfall über den Kühler 10 zum Teil kompensiert. Ein Mischbetrieb ist möglich.

Fig. 5 zeigt eine Ausführungsvariante des erfindungsgemässen Helix-Dampferzeuger 10, bei dem die notwendige Umlenkung der Kühlluft 13 nach dem Durchströmen des Helix-Bündels mit einem Luftaustritt im unteren Bereich des Kühlers bewerkstelligt wird, wobei die Luftaustrittsleitung 25 seitlich abzweigt. Das ergibt eine günstige Anordnung der Luftleitungen in der Anlage, und die Wandstärke der Druckschale kann sich durch den Einsatz hoch warmfester Stähle und wegen des kleineren Durchmessers des zylindrischen Druckgefässes 23 so stark reduzieren, dass die Variante mit dem unteren Luftaustritt (vgl. Fig. 5) trotz des heisseren Druckgefässes billiger wird als beispielsweise die in Fig. 2 dargestellte Variante mit dem Luftaustritt im oberen Bereich des Kühlers.

Der erfindungsgemässe Helix-Dampferzeuger ist als Kühlluftkühler im Betriebsbereich zwischen 5 und 100% Kühlleistung einsetzbar und eignet sich nicht nur für Kombi-Kraftwerke, sondern auch für den einfachen Zyklus einer Gasturbinenanlage.

### Bezugszeichenliste

- 1: Verdichter
- 2: Brennkammer
- 3: Gasturbine
- 4: Generator
- 5: Ansaugluft
- 6: verdichtete Luft (zur Brennkammer)
- 7: Brennstoff
- 8: Heissgase
- 9: Abgas
- 10: Helix-Dampferzeuger
- 11: verdichtete Luft (zum Kühlluftkühler)
- 12: Wasser
- 13: Kühlluft
- 14: Dampf vom Helix-Dampferzeuger
- 15: Abhitzedampferzeuger
- 16: Dampf für Dampfkreislauf
- 17: Dampfturbine
- 18: Speisewasser
- 19: Rauchgas
- 20: Generator
- 21: entspannter Dampf
- 22: Kondensator
- 23: Druckgefäss
- 24: Eintrittsleitung der Luft in Pos. 23
- 25: Austrittsleitung der Luft aus Pos. 23
- 26: inneres Mantelrohr
- 27: Innenwand
- 28: Sammelraum
- 29: Aussenwand
- 30: spiralförmig gewundene Rohre
- 31: Ringraum
- 32: Leitung für Pos. 12
- 33: Leitung für Pos. 14
- 34: Regelventil
- 35: Leitung für Wasser
- 36: Regelventil
- 37: Wassereinspritzdüse
- 38: Leitung für Dampf
- 39: Regelventil
- 40: Dampfeindüsung
- 41: äusseres Mantelrohr

## Patentansprüche

1. Verwendung eines Helix-Dampferzeugers, welcher sich in einem vertikal angeordneten zylindrischen Druckgefäss (23) befindet und dessen spiralförmig gewundenen, durchgehend von unten nach oben geführten Rohre (30) einen Raum zwischen einem inneren (26) und einem äusseren Mantelrohr (41) ausfüllen, wobei den Rohren (30) über eine Leitung (32) Wasser (12) zuführbar und über eine Leitung (33) Dampf (14) aus den Rohren (30) abführbar ist, und wobei am unteren Bündelende die Rohre (30) mit der Wasserzufuhrleitung (32) und am oberen Bündelende die Rohre (30) mit der Dampfabfuhrleitung (33) verbunden sind, und eine Eintrittsleitung (24) und eine Austrittsleitung (25) für ein gasförmiges Medium so mit dem Druckgefäss (23) verbunden sind, dass die Helix von oben nach unten mit dem gasförmigen Medium durchströmbar ist, wobei das gasförmige Medium Luft (11, 13) ist, als Kühlluftkühler für Kombi-Kraftwerksanlagen und Gasturbinenanlagen.

2. Helix-Dampferzeuger, bestehend aus einem vertikal angeordneten zylindrischen Druckgefäss (23) und aus spiralförmig gewundenen, durchgehend von unten nach oben geführten Rohren (30), die einen Raum zwischen einem inneren (26) und einem äusseren Mantelrohr (41) ausfüllen, wobei den Rohren (30) über eine Leitung (32) Wasser (12) zuführbar und über eine Leitung (33) Dampf (14) aus den Rohren (30) abführbar ist, und wobei am unteren Bündelende die Rohre (30) mit der Wasserzufuhrleitung (32) und am oberen Bündelende die Rohre (30) mit der Dampfabfuhrleitung (33) verbunden sind, und eine Eintrittsleitung (24) und eine Austrittsleitung (25) für ein gasförmiges Medium so mit dem Druckgefäss (23) verbunden sind, dass die Helix von oben nach unten mit dem gasförmigen Medium durchströmbar ist, **dadurch gekennzeichnet, dass** das gasförmige Medium Luft (11, 13) ist, und die Eintrittsleitung (24) für die verdichtete Luft (11) mit dem unteren Ende des inneren Mantelrohres (41) des Druckgefässes (23) verbunden ist und die Austrittsleitung (25) für die gekühlte Luft (13) stromab einer am tiefsten Punkt des Druckgefässes (23) vorgesehenen Umlenkung der Luft angeordnet ist.

3. Helix-Dampferzeuger nach Anspruch 2, **dadurch gekennzeichnet, dass** in der Austrittsleitung (25) der gekühlten Luft (13) eine Vorrichtung zur Dampfeinspritzung (40) angeordnet ist, welche wahlweise zuschaltbar ist.

4. Helix-Dampferzeuger nach Anspruch 2, **dadurch gekennzeichnet, dass** die Eintrittsleitung (24) für die verdichtete Luft (11) in den unteren Teil des inneren Mantelrohres (26) mündet, in welchem eine Vorrichtung zur Wassereinspritzung (37) angeordnet ist, welche wahlweise zuschaltbar ist.

5. Helix-Dampferzeuger nach Anspruch 2, **dadurch gekennzeichnet, dass** die Eintrittsleitung (24) für die verdichtete Luft (11) in den unteren Teil des inneren Mantelrohres (26) mündet, welches seinerseits im oberen Teil in einen von einer Innenwand (27) des Druckgefässes (23) begrenzten Sammelraum (28) mündet, und dass das äussere Mantelrohr (41) und die Aussenwand (29) des Druckgefässes (23) einen Ringraum (31) begrenzen, der mit der im oberen Bereich des Dampferzeugers angeordneten Austrittsleitung (25) der Kühlluft (13) aus dem Druckgefäss (23) in Verbindung steht.

## Claims

1. Use of a helix steam generator which is located in a vertically arranged cylindrical pressure vessel (23) and of which the spirally wound tubes (30) led continuously from the bottom upwards fill a space between an inner (26) and an outer (41) jacket tube, water (12) being capable of being supplied to the tubes (30) via a conduit (32) and steam (14) being capable of being discharged from the tubes (30) via a conduit (33), and the tubes (30) being connected to the water supply conduit (32) at the lower bundle end and the tubes (30) to the steam discharge conduit (33) at the upper bundle end, and an inflow conduit (24) and an outflow conduit (25) for a gaseous medium being connected to the pressure vessel (23) in such a way that the gaseous medium is capable of flowing through the helix from the top downwards, the gaseous medium being air (11, 13), as a cooling-air cooler for combined power plants and gas turbine plants.

2. Helix steam generator, consisting of a vertically arranged cylindrical pressure vessel (23) and of spirally wound tubes (30) led continuously from the bottom upwards, which fill a space between an inner (26) and an outer (41) jacket tube, water (12) being capable of being supplied to the tubes (30) via a conduit (32) and steam (14) being capable of being discharged from the tubes (30) via a conduit (33), and the tubes (70) being connected to the water supply conduit (32) at the lower bundle end and the tubes (30) to the steam discharge conduit (33) at the upper bundle end, and an inflow conduit (24) and an outflow conduit (25) for a gaseous medium being connected to the pressure vessel (23) in such a way that the gaseous medium is capable of flowing through the helix from the top downwards, **characterized in that** the gaseous medium is air (11, 13), and the inflow conduit (24) for the compressed air (11) is connected to the lower end of the inner jacket cube (41) of the pressure vessel (23) and the outflow conduit (25) for the cooled air (13) is arranged downstream of an air deflection provided at the lowest point of the pressure vessel (23).

3. Helix steam generator according to Claim 2, **characterized in that** a device for steam injection (40), which is capable of being connected selectively, is arranged in the outflow conduit (25) for the cooled air (13).

4. Helix steam generator according to Claim 2, **characterized in that** the inflow conduit (24) for the compressed air (11) opens into the lower part of the inner jacket tube (26) in which a device for water injection (37), which is capable of being connected selectively, is arranged.

5. Helix steam generator according to Claim 2, **characterized in that** the inflow conduit (24) for the compressed air (11) opens into the lower part of the inner jacket tube (26) which itself, in the upper part, opens into a collecting space (28) delimited by an inner wall (27) of the pressure vessel (23), and **in that** the outer jacket tube (41) and the outer wall (29) of the pressure vessel (23) delimit an annular space (31) which is connected to the outflow conduit (25) for the cooling air (13) from the pressure vessel (23), said outflow conduit being arranged in the upper region of the steam generator.

## Revendications

1. Utilisation comme refroidisseur d'air de refroidissement d'installations de cogénération et d'installations de turbines à gaz d'une unité de création de vapeur en hélice située dans un récipient cylindrique sous pression (23) disposé verticalement et dont des tubes (30) enroulés en spirale et disposés en continu du bas vers le haut remplissent un espace situé entre un tube d'enveloppe intérieure (26) et un tube d'enveloppe extérieure (41), de l'eau (12) pouvant être amenée aux tubes (30) par un conduit (32) et de la vapeur (14) pouvant être extraite des tubes (30) par un conduit (33), les tubes (30) étant reliés au conduit (32) d'amenée d'eau à l'extrémité inférieure du faisceau et les tubes (30) étant reliés au conduit (33) d'extraction de vapeur à l'extrémité supérieure du faisceau, un conduit d'entrée (24) et un conduit de sortie (25) pour un fluide gazeux étant reliés au récipient sous pression (23) de telle sorte que l'hélice puisse être traversée du haut vers le bas par le fluide gazeux, le fluide gazeux étant de l'air (11, 13).

2. Unité de création de vapeur en hélice, constituée d'un récipient cylindrique sous pression (23) disposé verticalement et de tubes (30) enroulés en spirale, disposés en continu du bas vers le haut, qui remplissent un espace situé entre un tube d'enveloppe intérieure (26) et un tube d'enveloppe extérieure (41), de l'eau (12) pouvant être amenée aux tubes (30) par un conduit (32) et de la vapeur (14) pouvant être extraite des tubes (30) par un conduit (33), les tubes (30) étant reliés au conduit (32) d'amenée d'eau à l'extrémité inférieure du faisceau et les tubes (30) étant reliés au conduit (33) d'extraction de vapeur à l'extrémité supérieure du faisceau, un conduit d'entrée (24) et un conduit de sortie (25) pour un fluide gazeux étant reliés au récipient sous pression (23) de telle sorte que l'hélice puisse être traversée du haut vers le bas par le fluide gazeux, **caractérisée en ce que** le fluide gazeux est de l'air (11, 13), **en ce que** le conduit d'entrée (24) pour l'air comprimé (11) est relié à l'extrémité inférieure du tube d'enveloppe intérieure (41) du récipient sous pression (23), et **en ce que** le conduit de sortie (25) pour l'air refroidi (13) est disposé en aval d'une dérivation prévue pour l'air au point le plus bas du récipient sous pression (23).

3. Unité de création de vapeur en hélice selon la revendication 2, **caractérisée en ce qu'**un dispositif d'injection de vapeur (40) est disposé dans le conduit de sortie (25) de l'air refroidi (13) et peut être branché de manière sélective.

4. Unité et création de vapeur en hélice selon la revendication 2, **caractérisée en ce que** le conduit d'entrée (24) pour l'air comprimé (11) débouche dans la partie inférieure du tube d'enveloppe intérieure (26) dans laquelle est disposé un dispositif d'injection d'eau (37) qui peut être branché de manière sélective.

5. Unité de création de vapeur en hélice selon la revendication 2, caractérisé un en ce que le conduit d'entrée (24) pour l'air comprimé (11) débouche dans la partie inférieure du tube d'enveloppe intérieure (26) qui, pour sa part, débouche dans sa partie supérieure dans une chambre de collecte (28) délimitée par une paroi intérieure (27) du récipient sous pression (23), et en ce que le tube d'enveloppe extérieure (41) et la paroi extérieure (29) du récipient sous pression (23) délimitent un espace annulaire (31) qui communique avec le conduit de sortie (25) d'air comprimé refroidi (13) hors du récipient sous pression (23) disposé dans la partie supérieure de l'unité de création de vapeur.
